(19) Europäisches Patentamt
European Patent Office
Office européen des brevets

(11) **EP 4 542 372 A1**

(12) **EUROPEAN PATENT APPLICATION**

(43) Date of publication:
**23.04.2025 Bulletin 2025/17**

(21) Application number: **23203801.8**

(22) Date of filing: **16.10.2023**

(51) International Patent Classification (IPC):
*G06F 7/76* (2006.01)

(52) Cooperative Patent Classification (CPC):
**G06F 7/764; H04L 9/003;** G06F 2207/7238;
H04L 2209/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nagravision Sarl
1033 Cheseaux-sur-Lausanne (CH)**

(72) Inventor: **PELLETIER, Hervé
1033 Cheseaux-sur-Lausanne (CH)**

(74) Representative: **Ipside
6, Impasse Michel Labrousse
31100 Toulouse (FR)**

(54) **METHOD OF GENERATING AN OUTPUT BINARY WORD FROM AN INPUT BINARY WORD, METHOD OF PERFORMING AN ARITHMETIC OPERATION ON AN INPUT BINARY WORD ASSOCIATED TO AN OUTPUT BINARY WORD, CORRESPONDING COMPUTER PROGRAM PRODUCT AND DEVICES**

(57)     A method is proposed for the generation of an output binary word from an input binary word. Such method comprises:
- executing a first floating-point multiplication (5200) wherein the input binary word interpreted as an integer number is multiplied with a first predetermined number of floating-point type, resulting in a first argument number of floating-point type;
- applying a predetermined invertible function (5220) to the first argument number delivering a first output number of the floating-point type, the output binary word being based on the first output number.

The predetermined invertible function is configured to have the first output number having a non-null output rounding error resulting in having an application, to the first output number, of an invert function of the predetermined invertible function that delivers an input number of the floating-point type corresponding to the input operand with a non-null input error.

**Figure 2**

**Description**

## 1. FIELD OF THE DISCLOSURE

The field of the disclosure is that of countermeasures against side channel attacks.

More specifically, the disclosure relates to technics for improving the masking of data.

The disclosure can be of interest in any field wherein the masking of data is of interest. This is the case for instance in the field of cryptography, e.g. for secure communications, for end-to-end encryption (e.g. for the diffusion of content in a pay-TV system), for storing data (e.g. passwords), etc.

## 2. TECHNOLOGICAL BACKGROUND

In the field of cryptography, to process a non-linear function (e.g. like in AES (for "Advanced Encryption Standard")) use is made of a substitution table ($ST$) with pre-computed values instead of recalculating the values of the non-linear function when needed. Furthermore, the binary words in such $ST$ are often interpreted as integer numbers for their processing. All this indeed takes less place on silicon chip and use less energy than operations performed on the fly.

The usage of such $ST$ is often protected against side channel attacks by affine masking countermeasures.

For instance, let consider $x$ the input number of a given non-linear function and $y$ the output number of the considered non-linear function, the corresponding substitution table $ST$ is such that $y=ST(x)$. Conversely, let consider two random numbers M1, M2 as the input and output masks. In the case of Boolean masking countermeasure (e.g. as applied in AES), the masked table $MST$ is defined by $MST(x)=ST(x \oplus M1) \oplus M2$, with $\oplus$ that represents the bitwise XOR between the binary representations of the considered arguments. Then $MST$ is used instead of $ST$ to mask the $ST(x)$ values.

Unfortunately, with deep machine learning approach it is possible to identify the $MST$ content and the value of the masks M1 and M2 with a certain probability during its creation or during its usage. This approach is feasible because internal data (M1, M2, $MST(x)$) can be correctly labelled and the total number of possible labels stays low (for an 8-bit binary word only 255 labels are possible).

Moreover, high order attack can defeat this countermeasure by exploiting leakage on mask M2 and $MST(x)$ according a correct hamming weight leakage model.

There is thus a need for a solution for improving the countermeasures against side channel attacks, in particular the masking countermeasures.

## 3. SUMMARY

A particular aspect of the present disclosure relates to a method of generating an output binary word from an input binary word by an electronic device. According to such method, the electronic device executes:

- executing a first floating-point multiplication wherein the input binary word interpreted as an integer number is multiplied with a first predetermined number of floating-point type, resulting in a first argument number of floating-point type;
- applying a predetermined invertible function to an input operand based on the first argument number delivering a first output number, wherein the input operand and the first output number are of the floating-point type, the output binary word being based on the first output number.

The predetermined invertible function is configured to have the first output number having a non-null output rounding error, wherein inputting the first output number to an invert function of the predetermined function results in an input number of the floating-point type corresponding to the input operand with a non-null input rounding error.

Thus, the present disclosure proposes a new and inventive solution for improving the masking countermeasures against side channel attacks.

More particularly, the use of floating-point operations in cooperation with an invertible function that presents non-null rounding errors (e.g. a function with a non-null ULP (for "unit of least precision"). It can be e.g. a log function) leads to the generation of output floating-point numbers represented by binary words that can exhibit a large Hamming distance (and thus a large Hamming weight) whereas the respective binary words representations of the input arguments represent integer numbers that are close in the meaning of a mathematical norm. In other words, they are integer numbers close to each other. Such decorrelation between the distance of the input integer numbers and the distance between the binary representation of the output floating-points numbers makes e.g. hard to train a deep learning machine. This thus improves the resistance of the masking of the input binary words against side channel attacks.

In some embodiments, the input binary word is associated to a given binary word and the electronic device executes:

- executing a second floating-point multiplication wherein the given binary word interpreted as an integer number is multiplied with a second predetermined number of a floating-point type, resulting in an intermediate number of the floating-point type;
- executing a floating-point subtraction wherein the intermediate number is subtracted to the first output number, resulting in a second output number of the floating-point type.

The output binary word is based on the second output number.

Thus, the decorrelation between the distance of the input integer numbers and the distance between the binary representation of the output floating-points numbers is further improved by the subtraction of the intermediate number to the first output number delivered by the invertible function. This further improves the resistance of the masking of the input binary word against side channel attacks.

In some embodiments, the electronic device executes:

- executing a floating-point addition wherein the first argument number is added to a third predetermined number of the floating-point type, resulting in a second argument number of the floating-point type.

The input operand being based on the second argument number.

Thus, the decorrelation between the distance of the input integer numbers and the distance between the binary representation of the output floating-points numbers is further improved by the addition of the third predetermined number to the argument of the invertible function. This further improves the resistance of the masking of the input binary word against side channel attacks.

In some embodiments wherein the input binary word is associated to a given binary word, the input binary word is an element of a table, the given binary word being a function of an index identifying the binary word in the table.

In some embodiments, the given binary word is the result of a bitwise XOR operator between the index expressed as a binary word and a random integer expressed as a binary word.

Thus, the index of the input binary word is masked (or obfuscated).

Another aspect of the present disclosure relates to a method of executing an arithmetic operation taking as an operand an input binary word associated to an output binary word generated by the execution of the method of generating an output binary word from an input binary word discussed above (in any of the embodiments discussed above). According to such method of executing an arithmetic operation, an electronic device executes:

- applying the invert function of the predetermined invertible function to a first number which is based on the output binary word interpreted as a floating-point number delivering a second number of the floating-point type;
- executing the arithmetic operation taking as operands, on one hand, a second input operand which is based on the second number and, on the other hand, a third input operand of a floating-point type, resulting in a third number;

- executing a floating-point division wherein the third number is divided by the first predetermined number resulting in a fourth number representative of a result of the predetermined operation taking as operands, on one hand, the input binary word and, on the other hand, the third input operand divided by the first predetermined number of a floating-point type.

Thus, the result of the arithmetic operation performed on the input binary word is obtained without having to store in memory the value of the input binary word itself. In other words, the fourth number is obtained without the need of the knowledge of the input binary word. Only the masked value of the input binary word, i.e. the associated output binary word, is used for the derivation of the fourth number which corresponds to the result of the predetermined operation performed on the input binary word.

For instance, the arithmetic operation is an addition or a multiplication. In such cases, the method is thus adapted to perform the additive or multiplicative masking of the input binary word by a number corresponding to the third input operand divided by the first predetermined number.

In some embodiments wherein the output binary word is generated by the execution of the floating-point subtraction, the electronic device executes:

- executing a floating-point addition wherein the output binary word interpreted as a floating-point number is added to the intermediate number resulting in a third output number of the floating-point type.

The first number is based on the third output number.

Thus, the arithmetic operation is performed on the input binary word while the resistance of the masking of the input binary word against side channel attacks is further improved.

In some embodiments wherein the output binary word is generated by the execution of the floating-point addition, the electronic device executes:

- executing a floating-point subtraction wherein the third predetermined number is subtracted to the second number resulting in a fourth output number of the floating-point type.

The second input operand is based on the third output number.

Thus, the arithmetic operation is performed on the input binary word while the resistance of the masking of the input binary word against side channel attacks is further improved.

In some embodiments, the third input operand is an integer multiple of the first predetermined number.

In some embodiments, the arithmetic operation is an addition and the electronic device executes:

- taking the integer part of the fourth number delivering a rounded fourth number;
- converting the rounded fourth number by executing an algorithm for the conversion between additive and Boolean masking.

Thus, the method is also adapted to perform the Boolean masking of the input binary word by another binary word corresponding to the rounding value of the third input operand divided by the first predetermined number. In the present case, the Boolean masking of the input binary word is performed using only the masked value of the input binary word, i.e. the associated output binary word, and not the input binary word itself.

Another aspect of the present disclosure relates to a computer program product comprising program code instructions for implementing the above-mentioned method of generating an output binary word from an input binary word (in any of the different embodiments discussed above), when the program is executed on a computer or a processor.

Another aspect of the present disclosure relates to a computer program product comprising program code instructions for implementing the above-mentioned method of executing an arithmetic operation taking as an operand an input binary word associated to an output binary word (in any of the different embodiments discussed above), when the program is executed on a computer or a processor.

Another aspect of the present disclosure relates to an electronic device comprising means configured for executing all or part of the steps of the above-mentioned method of generating an output binary word from an input binary word (in any of the different embodiments discussed above). Thus, the features and advantages of this first device are the same as those of the corresponding steps of said method. Therefore, they are not detailed any further.

Another aspect of the present disclosure relates to a second electronic device comprising means configured for executing all or part of the steps of the above-mentioned method of executing an arithmetic operation taking as an operand an input binary word associated to an output binary word (in any of the different embodiments discussed above). Thus, the features and advantages of this second device are the same as those of the corresponding steps of said method. Therefore, they are not detailed any further.

## 4. LIST OF FIGURES

Other features and advantages of embodiments shall appear from the following description, given by way of indicative and non-exhaustive examples and from the appended drawings, of which:

- Figure 1 illustrates an output table comprising output binary words resulting of an application of the method of Figure 2 to the input binary words of an input table according to one embodiment of the present disclosure;
- Figure 2 illustrates a flowchart of a method of generating an output binary word from an input binary word according to one embodiment of the present disclosure;
- Figure 3 illustrates a flowchart of the method of performing an arithmetic operation taking as an operand an input binary word associated to an output binary word generated by the execution of the method of Figure 2 according to an embodiment of the present disclosure;
- Figure 3a illustrates a flowchart of the method of performing an arithmetic operation taking as an operand an input binary word associated to an output binary word generated by the execution of the method of Figure 2 according to another embodiment of the present disclosure;
- Figure 4 illustrates an example of the structural blocks of an electronic device allowing steps of the method of Figure 2 to be executed according to one embodiment of the present disclosure;
- Figure 5 illustrates an example of the structural blocks of an electronic device allowing steps of the method of Figure 3 or of Figure 3a to be executed according to one embodiment of the present disclosure.

## 5. DETAILED DESCRIPTION

In all of the figures of the present document, the same numerical reference signs designate similar elements and steps.

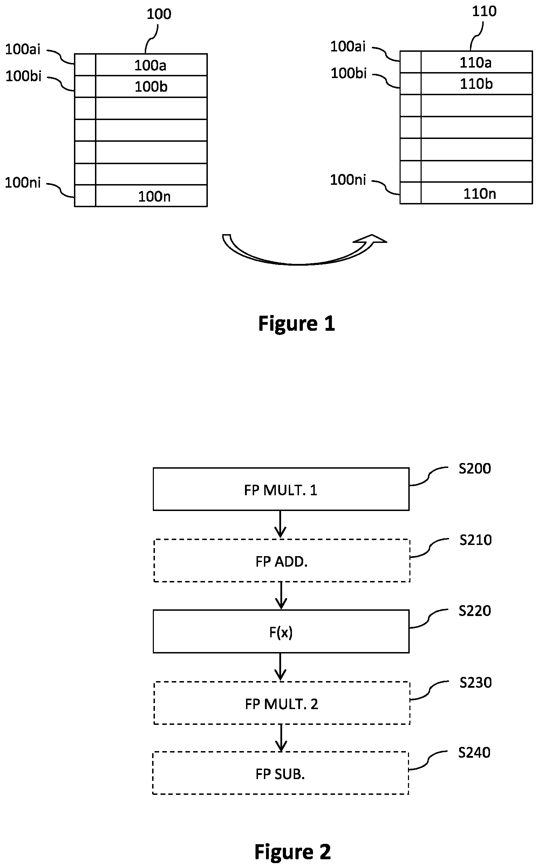

Referring now to **figure 1,** we illustrate an output table 110 comprising output binary words 110a, 110b, ..., 110n resulting of an application of the method of Figure 2 to the input binary words 100a, 100b, ..., 100n of an input table 100 according to one embodiment of the present disclosure.

More particularly, the input binary words 100a, 100b, ..., 100n of the input table 100 are identified by a respective index 100ai, 100bi, ..., 100ni.

Each of the output binary words 110a, 110b, ..., 110n of the output table 110 results of the application of the method of Figure 2 to a respective input binary word 100a, 100b, ..., 100n. As such, a given output binary word 110a or 110b or ... or 110n is identified in the output table 110 by the same index 100ai or 100bi or ... or 100ni as the respective input binary word 100a or 100b or ... or 100n the given output binary word 110a or 110b or ... or 110n results of.

For instance, the input table 100 is a substitution table *ST* and the output table 110 is the masked table *MST* resulting of the application of the method of Figure 2 to the input binary words 100a, 100b, ..., 100n of the input table 100.

Referring now to **Figure 2,** we describe the steps of a method of generating an output binary word 110a or 110b or ... or 110n from an input binary word 100a or 100b or ... or 100n by an electronic device 400 according to one embodiment of the present disclosure.

More particularly, in a **step S200,** the electronic device 400 executes a first floating-point multiplication wherein the input binary word 100a or 100b or ... or 100n interpreted as an integer number is multiplied with a first predetermined number $\beta$ of floating-point type, resulting in a first argument number of floating-point type.

More particularly, the input binary word 100a or 100b or ... or 100n is identified in the input table 100 by an index *i.* In the present embodiment, the input binary word 100a or 100b or ... or 100n is associated to a given binary word function of the index *i.* For instance, the given binary word results of a bitwise XOR operator between the index *i* expressed as a binary word and a random integer *r* expressed as a binary word, resulting in a masked (or obfuscated) index *i⊕r.* Thus, the index 100ai or 100bi or ... or 100ni identifying the input binary word is masked. In this case, the input binary word 100a or 100b or ... or 100n is the element of the input table 100, considered to be a substitution table *ST* as an example, labelled in the sequel:

$$ST(i\oplus r)$$

where:

- *i* is the binary word representing an index in the input table 100;
- *r* is the binary word representing the random integer; and
- ⊕ is the bitwise XOR operator.

The first argument number of floating-point type is thus expressed as:

$$\beta * ST(i\oplus r)$$

In a **step S210,** the electronic device 400 executes a floating-point addition wherein the first argument number $\beta * ST(i\oplus r)$ is added to a third predetermined number $\gamma$ of the floating-point type, resulting in an argument of the floating-point type. The argument is thus expressed as:

$$\beta * ST(i\oplus r) + \gamma$$

In a **step S220,** the electronic device 400 applies a predetermined invertible function *f* to the argument number delivering a first output number. The argument and the first output number are of the floating-point type. The first output number is thus expressed as:

$$f(\beta * ST(i\oplus r) + \gamma)$$

More particularly, the predetermined invertible function *f* is configured to have the first output number having a non-null output rounding error, e.g. compared to the expected theoretical value for *f*. This is for instance due to the rounding errors in the processing with numbers represented on a finite number of bits. This results in having an application, to the first output number $f(\beta * ST(i\oplus r) + \gamma)$, of an invert function $f^1$ of the predetermined invertible function *f* that delivers an input number of the floating-point type corresponding to the argument $\beta * ST(i\oplus r) + \gamma$ plus a non-null input error. In other words, the application of the invert function $f^1$ to the first output number does not allow recovering exactly the original argument $f(\beta * ST(i\oplus r) + \gamma)$.

Indeed, the use of floating-point operations in cooperation with an invertible function that presents non-null rounding errors (e.g. a function with a non-null ULP (for "unit of least precision"). It can be e.g. a log function) leads to the generation of output floating-point numbers represented by binary words that can exhibit a large Hamming distance (and thus a large Hamming weight) whereas the respective binary words representations of the input arguments represent integer numbers that are close in the meaning of a mathematical norm. In other words, they are integer numbers close to each other. Such decorrelation between the distance of the input integer numbers and the distance between the binary representation of the output floating-points numbers makes hard to train a deep learning machine. This thus improves the resistance of the masking of the input binary words against side channel attacks.

In a **step S230,** the electronic device 400 executes a second floating-point multiplication. More particularly, the masked index *i⊕r* interpreted as an integer number is multiplied with a second predetermined number $\alpha$ of a floating-point type, resulting in an intermediate number $\alpha * (i\oplus r)$ of the floating-point type.

In a step **S240,** the electronic device 400 executes a floating-point subtraction wherein the intermediate number $\alpha * (i\oplus r)$ is subtracted to the first output number $f(\beta * ST(i\oplus r) + \gamma)$, resulting in a second output number of the floating-point type expressed as:

$$f(\beta * ST(i\oplus r) + \gamma) - \alpha * (i\oplus r)$$

Thus, the decorrelation between the distance of the input integer numbers and the distance between the binary representation of the output floating-points numbers is further improved by the subtraction of the intermediate number to the first output number delivered by the invertible function. This further improves the resistance of the masking of the input binary word against side channel attacks.

In the present embodiment, the output binary word is the binary representation of the second output number $f(\beta * ST(i\oplus r) + \gamma) - \alpha * (i\oplus r)$.

However, in some embodiments, no random integer $r$ is used for masking the index $i$. In such embodiments, the intermediate number of floating-point type is expressed as $\alpha * i$.

In some embodiments the step S210 is not executed. In some of those embodiments, the first output number is thus expressed as $f(\beta * ST(i\oplus r))$ and the output binary word is the binary representation of the second output number $f(\beta * ST(i\oplus r)) - \alpha * (i\oplus r)$ or $f(\beta * ST(i\oplus r)) - \alpha * i$. This makes the implementation simpler. However, the use of the third predetermined number $\gamma$ during the execution of the step S210 improves the decorrelation between the distance of the input integer numbers and the distance between the binary representation of the output floating-points numbers. This further improves the resistance of the masking of the input binary word against side channel attacks.

In some embodiments, the method of Figure 2 applies to an input binary word which is not an element of a table. In such case, the input binary word is an arbitrary binary word $IBW$ comprising a predetermined number of bits. In some of those embodiments, the first output number is expressed as $f(\beta * IBW)$ and the output binary word is the binary representation of the second output number $f(\beta * IBW) - \alpha * (i\oplus r)$ or $f(\beta * IBW) - \alpha * i$, with $i$ a predetermined binary word. In other of those embodiments, the first output number is expressed as $f(\beta * IBW + \gamma)$ and the output binary word is the binary representation of the second output number $f(\beta * IBW + \gamma) - \alpha * (i\oplus r)$ or $f(\beta * IBW + \gamma) - \alpha * i$, with $i$ a predetermined binary word.

In some embodiments the steps S230 and S240 are not executed. In some of those embodiments wherein the first output number is thus expressed as $f(\beta * ST(i\oplus r))$, the output binary word is the binary representation of the second output number $f(\beta * ST(i\oplus r))$. In other of those embodiments wherein the first output number is expressed as $f(\beta * IBW)$, the output binary word is the binary representation of the second output number $f(\beta * IBW)$. This makes the implementation simpler even if the use of the second predetermined number $\alpha$ during the execution of the step S210 improves the decorrelation between the distance of the input integer numbers and the distance between the binary representation of the output floating-points numbers.

In some embodiments, the first predetermined number $\beta$ and/or the second predetermined number $\alpha$ and/or the third predetermined number $\gamma$ is a number selected randomly. This further improves the resistance of the masking of the input binary words against side channel attacks.

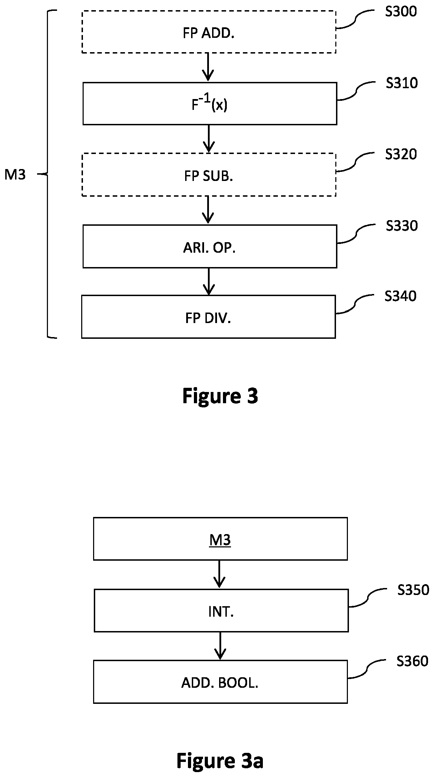

Referring now to **Figure 3,** we describe the steps of a method of performing an arithmetic operation taking as an operand an input binary word 100a or 100b or ... or 100n associated to an output binary word 110a or 110b or ... or 110n according to one embodiment of the present disclosure. Such arithmetic operation is e.g. an addition or a multiplication.

More particularly, the output binary word 110a or 110b or ... or 110n has been generated by the execution of the method of Figure 2. According to the embodiment of Figure 2, the output binary word 110a or 110b or ... or 110n is thus expressed as the binary representation of the second output number $f(\beta * ST(i\oplus r) + \gamma) - \alpha * (i\oplus r)$.

Accordingly, in a **step S300,** an electronic device 500 executes a floating-point addition wherein the output binary word interpreted as a floating-point number is added to the intermediate number $\alpha * (i\oplus r)$ resulting in a first number OP1 of the floating-point type. In the present embodiment, the first number OP1 is thus expressed as:

$$f(\beta * ST(i\oplus r) + \gamma)$$

In a **step S310,** the electronic device 500 applies the invert function $f^{-1}$ of the predetermined invertible function $f$ to the first number OP1 delivering a second number OP2 of the floating-point type. In the present embodiment, the second number OP2 is thus expressed as:

$$\beta * ST(i\oplus r) + \gamma$$

In a **step S320,** the electronic device 500 applies a floating-point subtraction wherein the third predetermined number $\gamma$ is subtracted to the second number OP2 resulting in a fourth output number of the floating-point type. In the present embodiment, the fourth output number is thus expressed as:

$$\beta * ST(i\oplus r)$$

In a **step S330,** the electronic device 500 executes the arithmetic operation taking as operands, on one hand, the fourth output number and, on the other hand, a third input operand $\mu$ of a floating-point type, resulting in a third number OP3. For instance, when the arithmetic operation is an addition, the third number OP3 is expressed as:

$$\beta * ST(i\oplus r) + \mu$$

Conversely, when the arithmetic operation is a multiplication, the third number OP3 is expressed as:

$$\beta * ST(i\oplus r) * \mu$$

Back to Figure 3, in a **step S340,** the electronic device 500 executes a floating-point division wherein the third number OP3 is divided by the first predetermined number $\beta$ resulting in a fourth number OP4 representative of a result of the predetermined operation taking as operands, on one hand, the input binary word $ST(i\oplus r)$

and, on the other hand, the third input operand $\mu$ divided by the first predetermined number $\beta$ of a floating-point type. For instance, when the arithmetic operation is an addition, the fourth number OP4 is expressed as:

$$ST(i \oplus r) + \mu/\beta$$

Conversely, when the arithmetic operation is a multiplication, the fourth number OP4 is expressed as:

$$ST(i \oplus r) * \mu/\beta$$

Thus, the result of the arithmetic operation performed on the input binary word $ST(i \oplus r)$ is obtained without having to store in memory the value of the input binary word $ST(i \oplus r)$ itself. In other words, the fourth number OP4 is obtained without the need of the knowledge of the input binary word $ST(i \oplus r)$. Only the masked value of the input binary word, i.e. the associated output binary word which is the binary representation of the number $f(\beta * ST(i \oplus r) + \gamma) - \alpha * (i \oplus r)$, is used for the derivation of the fourth number OP4. For instance, when the arithmetic operation is an addition (respectively a multiplication), the method is thus adapted to perform the additive (respectively the multiplicative masking) of the input binary word $ST(i \oplus r)$ by a number corresponding to the third input operand $\mu$ divided by the first predetermined number $\beta$.

In some embodiments, the third input operand $\mu$ is an integer multiple of the first predetermined number $\beta$. Thus, when the arithmetic operation is e.g. an addition, the fourth number OP4 corresponds to the addition of an integer number to the input binary word $ST(i \oplus r)$. When the arithmetic operation is e.g. a multiplication, the fourth number OP4 corresponds to the multiplication of the input binary word $ST(i \oplus r)$ by an integer number.

In the embodiment of Figure 3, the output binary word 110a or 110b or ... or 110n has been generated by the execution of the method of Figure 2 and is thus considered as the binary representation of the number $f(\beta * ST(i \oplus r) + \gamma) - \alpha * (i \oplus r)$.

However, in some embodiments discussed above in relation with Figure 2, no random integer $r$ is used for masking the index $i$. In such embodiments, during the step S300, this is the intermediate number of floating-point type expressed as $\alpha * i$ which is added to the output binary word interpreted as a floating-point.

In some embodiments discussed above in relation with Figure 2 wherein the step S210 is not executed, the output binary word is the binary representation of the number $f(\beta * ST(i \oplus r)) - \alpha * (i \oplus r)$ or $f(\beta * ST(i \oplus r)) - \alpha * i$. In such embodiments, the step S320 is not executed as the second number OP2 is e.g. directly $f(\beta * ST(i \oplus r))$.

In some embodiments discussed above in relation with Figure 2, the input binary word is not an element of a table but is an arbitrary binary word $IBW$ comprising a predetermined number of bits. In some of those embodiments, the output binary word is the binary representation of the number e.g. as $f(\beta * IBW) - \alpha * (i \oplus r)$ or as $f(\beta * IBW) - \alpha * i$, with i a predetermined binary word. In such embodiments, the step S320 is not executed as the second number OP2 is e.g. directly $f(\beta * IBW)$.

In some embodiments discussed above in relation with Figure 2 wherein the steps S230 and S240 are not executed, the output binary word is expressed e.g. as the binary representation of the number $f(\beta * ST(i \oplus r))$ or as $f(\beta * IBW)$. In such embodiments, the step S300 is not executed as the first number OP1 is e.g. directly $f(\beta * ST(i \oplus r))$ or $f(\beta * IBW)$.

Referring now to **Figure 3a,** we describe the steps of a method of performing an arithmetic operation taking as an operand an input binary word 100a or 100b or ... or 100n associated to an output binary word 110a or 110b or ... or 110n according to another embodiment of the present disclosure.

More particularly, in the present embodiment, the method of performing an arithmetic operation comprises a combination of all or part of the steps S300, S310, S320, S330 and S340 according to any one of the various embodiments described above in relation with Figure 2. Such combination is executed during a phase M3.

However, according to the embodiment of Figure 3a, the arithmetic operation is an addition and the third input operand $\mu$ is an integer multiple of the first predetermined number $\beta$, i.e. $\mu = k * \beta$ with $k$ an integer.

After the execution of the phase M3, in a **step S350,** the electronic device 500 takes the integer part of the fourth number OP4 delivering a rounded fourth number. Depending on the implementation, the rounded fourth number can be expressed e.g. as

$$\lfloor ST(i \oplus r) \rfloor + k \quad \text{or} \quad \lfloor IBW \rfloor + k \text{ . with } \lfloor . \rfloor \text{ that}$$

denotes the integer part (e.g. the floor function).

In a **step S360,** the electronic device 500 converts the rounded fourth number by executing an algorithm for the conversion between additive and Boolean masking.

Such algorithm is e.g. an algorithm as disclosed in the article by Jean-Sebastien Coron, Johann Großschädl, Mehdi Tibouchi, and Praveen Kumar Vadnala: "Conversion from Arithmetic to Boolean Masking with Logarithmic Complexity".

Thus, the present method is also adapted to perform the Boolean masking of the input binary word, $ST(i \oplus r)$ or $IBW$, by another binary word corresponding to the rounding value of the third input operand $\mu$ divided by the first predetermined number $\beta$. In the present case, the Boolean masking of the input binary word is performed using only the masked value of the input binary word, i.e. the associated output binary word, and not the input binary word itself.

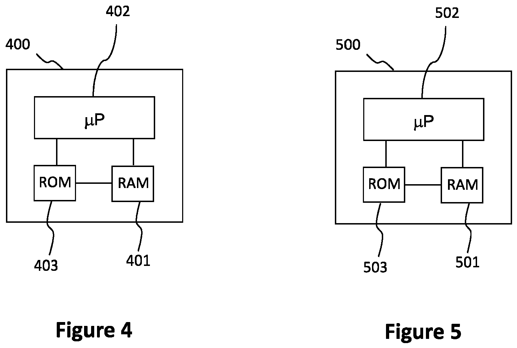

Referring now to **Figure 4,** in order to be able to implement the corresponding steps of the method of generating an output binary word from an input binary word in the various embodiments disclosed above in relationship with Figure 2, in some embodiments the electronic device 400 comprises:

- a non-volatile memory 403 (e.g. a read-only memory (ROM), a hard disk, a flash memory, etc.);
- a volatile memory 401 (e.g. a random-access memory or RAM) and a processor 402.

The non-volatile memory 403 is a non-transitory computer-readable carrier medium. It stores executable program code instructions, which are executed by the processor 402 in order to enable implementation of some steps of the method described above (method of generating an output binary word from an input binary word) in the various embodiments disclosed above in relationship with Figure 2.

Upon initialization, the aforementioned program code instructions are transferred from the non-volatile memory 403 to the volatile memory 401 so as to be executed by the processor 402. The volatile memory 401 likewise includes registers for storing the variables and parameters required for this execution.

The steps of the method of generating an output binary word from an input binary word may be implemented equally well:

- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Referring now to **Figure 5,** in order to be able to implement the corresponding steps of the method of performing an arithmetic operation on an input binary word associated to an output binary word in the various embodiments disclosed above in relationship with Figure 3 and Figure 3a, in some embodiments the electronic device 500 comprises:

- a non-volatile memory 503 (e.g. a read-only memory (ROM), a hard disk, a flash memory, etc.);
- a volatile memory 501 (e.g. a random-access memory or RAM) and a processor 502.

The non-volatile memory 503 is a non-transitory computer-readable carrier medium. It stores executable program code instructions, which are executed by the processor 502 in order to enable implementation of some steps of the method described above (method of performing an arithmetic operation on an input binary word associated to an output binary word) in the various embodiments disclosed above in relationship with Figure 3 and Figure 3a.

Upon initialization, the aforementioned program code instructions are transferred from the non-volatile memory 503 to the volatile memory 501 so as to be executed by the processor 502. The volatile memory 501 likewise includes registers for storing the variables and parameters required for this execution.

The steps of the method of performing an arithmetic operation on an input binary word associated to an output binary word may be implemented equally well:

- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In some embodiments, the electronic device 400 and/or the electronic device 500 is implemented in a set top box or in a gateway.

In some embodiments, the electronic device 400 and the electronic device 500 are a same device.

**Claims**

1. Method of generating an output binary word (110a, 110b, ..., 110n) from an input binary word (100a, 100b, ..., 100n) by an electronic device (400), **characterized in that** the electronic device (400) executes:

   - executing a first floating-point multiplication (S200) wherein the input binary word interpreted as an integer number is multiplied with a first predetermined number of floating-point type, resulting in a first argument number of floating-point type;

- applying a predetermined invertible function (S220) to an input operand based on the first argument number delivering a first output number, wherein the input operand and the first output number are of the floating-point type, the output binary word being based on the first output number,

and wherein the predetermined invertible function is configured to have the first output number having a non-null output rounding error, wherein inputting the first output number to an invert function of the predetermined function results in an input number of the floating-point type corresponding to the input operand with a non-null input rounding error.

2. Method according to claim 1, wherein the input binary word is associated to a given binary word, and wherein the electronic device executes:

- executing a second floating-point multiplication (S230) wherein the given binary word interpreted as an integer number is multiplied with a second predetermined number of a floating-point type, resulting in an intermediate number of the floating-point type;
- executing a floating-point subtraction (S240) wherein the intermediate number is subtracted to the first output number, resulting in a second output number of the floating-point type,

the output binary word being based on the second output number.

3. Method according to claim 1 or 2, wherein the electronic device executes:

- executing a floating-point addition (S210) wherein the first argument number is added to a third predetermined number of the floating-point type, resulting in a second argument number of the floating-point type,

the input operand being based on the second argument number.

4. Method according to claim 2 or 3 in that it depends on claim 2, wherein the input binary word is an element of a table (100), said given binary word being a function of an index (100ai, 100bi, ..., 100ni) identifying the binary word in the table.

5. Method according to claim 4, wherein said given binary word is the result of a bitwise XOR operator between the index expressed as a binary word and a random integer expressed as a binary word.

6. Method (M3) of executing an arithmetic operation taking as an operand an input binary word (100a, 100b, ..., 100n) associated to an output binary word (110a, 110b, ..., 110n) generated by the execution of the method according to any of the claims 1 to 5, **characterized in that** an electronic device (500) executes:

- applying the invert function (S310) of the predetermined invertible function to a first number which is based on the output binary word interpreted as a floating-point number delivering a second number of the floating-point type;
- executing the arithmetic operation (S330) taking as operands, on one hand, a second input operand which is based on the second number and, on the other hand, a third input operand of a floating-point type, resulting in a third number;
- executing a floating-point division (S340) wherein the third number is divided by the first predetermined number resulting in a fourth number representative of a result of the predetermined operation taking as operands, on one hand, the input binary word and, on the other hand, the third input operand divided by the first predetermined number of a floating-point type.

7. Method according to claim 6, wherein the output binary word is generated by the execution of the method according to claim 2 or according to any of the claims 3 to 5 in that it depends on claim 2, wherein the electronic device executes:

- executing a floating-point addition (S300) wherein the output binary word interpreted as a floating-point number is added to the intermediate number resulting in a third output number of the floating-point type,

and wherein the first number is based on the third output number.

8. Method according to claim 6 or 7, wherein the output binary word is generated by the execution of the method according to claim 3 or according to claim 4 or 5 in that it depends on claim 3, wherein the electronic device executes:

- executing a floating-point subtraction (S320) wherein the third predetermined number is subtracted to the second number resulting in a fourth output number of the floating-point type,

and wherein the second input operand is based on the third output number.

9. Method according to any of the claims 6 to 8, wherein the third input operand is an integer multiple of the first predetermined number.

**10.** Method according to claim 9, wherein the arithmetic operation is an addition, and wherein the electronic device executes:

  - taking the integer part (S350) of the fourth number delivering a rounded fourth number;
  - converting the rounded fourth number (S360) by executing an algorithm for the conversion between additive and Boolean masking.

**11.** Computer program product **characterized in that** it comprises program code instructions for implementing a method according to at least one of the claims 1 to 10, when said program is executed on a computer or a processor.

**12.** Device (400) for generating an output binary word (110a, 110b, ..., 110n) from an input binary word (100a, 100b, ..., 100n), **characterized in that** it comprises a processor (402) or a dedicated computing machine configured for:

  - executing a first floating-point multiplication (S200) wherein the input binary word interpreted as an integer number is multiplied with a first predetermined number of floating-point type, resulting in a first argument number of floating-point type;
  - applying a predetermined invertible function (S220) to an input operand based on the first argument number delivering a first output number, wherein the input operand and the first output number are of the floating-point type, the output binary word being based on the first output number,

  and wherein the predetermined invertible function is configured to have the first output number having a non-null output rounding error, wherein inputting the first output number to an invert function of the predetermined function results in an input number of the floating-point type corresponding to the input operand with a non-null input rounding error.

**13.** Device (500) for performing an arithmetic operation taking as an operand an input binary word (100a, 100b, ..., 100n) associated to an output binary word (110a, 110b, ..., 110n) generated by the execution of the method according to any of the claims 1 to 5, **characterized in that** it comprises a processor (502) or a dedicated computing machine configured for:

  - applying the invert function (S310) of the predetermined invertible function to a first number which is based on the output binary word interpreted as a floating-point number delivering a second number of the floating-point type;
  - executing the arithmetic operation (S330) taking as operands, on one hand, a second input operand which is based on the second number and, on the other hand, a third input operand of a floating-point type, resulting in a third number;
  - executing a floating-point division (S340) wherein the third number is divided by the first predetermined number resulting in a fourth number representative of a result of the predetermined operation taking as operands, on one hand, the input binary word and, on the other hand, the third input operand divided by the first predetermined number of a floating-point type.

100ai
100bi
100ni

100

100a
100b

100n

110ai
110bi
110ni

110

110a
110b

110n

**Figure 1**

FP MULT. 1 — S200

↓

FP ADD. — S210

↓

F(x) — S220

↓

FP MULT. 2 — S230

↓

FP SUB. — S240

**Figure 2**

**Figure 3**

**Figure 3a**

Figure 4

Figure 5

**EP 4 542 372 A1**

Europäisches Patentamt
European Patent Office
Office européen des brevets

# EUROPEAN SEARCH REPORT

Application Number

EP 23 20 3801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PING-TAK PETER TANG: "Table-driven implementation of the logarithm function in IEEE floating-point arithmetic", ACM TRANSACTIONS ON MATHEMATICAL SOFTWARE, ACM, NEW YORK, NY, US, vol. 16, no. 4, 1 December 1990 (1990-12-01), pages 378-400, XP058167164, ISSN: 0098-3500, DOI: 10.1145/98267.98294 * Section 2 * | 1-13 | INV. G06F7/76 |
| X | CHANG TZU-HSIEN ET AL: "Secure Boolean Masking of Gimli", 24 August 2022 (2022-08-24), 20220824, PAGE(S) 376 - 393, XP047631367, [retrieved on 2022-08-24] * Section 1, 2.3, 5.1 * | 1-13 | |
| X,D | CORON JEAN-SÉBASTIEN ET AL: "Conversion from Arithmetic to Boolean Masking with Logarithmic Complexity", 12 August 2015 (2015-08-12), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 130 - 149, XP047504154, ISBN: 978-3-319-10403-4 [retrieved on 2015-08-12] * the whole document * | 1-13 | **TECHNICAL FIELDS SEARCHED (IPC)** G06F H04L |

The present search report has been drawn up for all claims

| Place of search | Date of completion of the search | Examiner |
|---|---|---|
| Munich | 26 March 2024 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14